# EUROPÄISCHE PATENTANMELDUNG

(11) **EP 2 561 826 A1**
(43) Veröffentlichungstag der Anmeldung: **27.02.2013**
(21) Anmeldenummer: 11006976.2
(22) Anmeldetag: 26.08.2011
(51) Int. Cl.: A61C 8/00

(54) **Implantatsystem**

(71) Anmelder: SIC Invent AG, 4055 Basel (CH)
(72) Erfinder: von Malottki, Marcus, 40699 Erkrath (DE)
(74) Vertreter: Tergau & Walkenhorst

(57) **Zusammenfassung**

Ein Implantatsystem (160) zur Befestigung von verblocktem, lösbarem Zahnersatz (172) im Kiefer (166) eines Patienten, mit wenigstens einem distalen (130) und wenigstens einem mesialen Implantat (2), wobei das jeweilige Implantat (2,130) jeweils ein Einschraubteil (8) mit einem Außengewinde (14), ein in das Einschraubteil (8) einsetzbares Abutment (20,136) und ein mit dem Abutment (20,136) mit einer Funktionsschraube (32) verschraubbares Funktionsteil (26) zur Befestigung des Zahnersatzes (172) umfasst, soll die Verankerung von verblocktem Zahnersatz (172) in einem Kiefer (166) gegenüber herkömmlichen Lösungen verbessern. Dazu ist erfindungsgemäß das Abutment (20) des jeweiligen mesialen Implantats (2) mehrteilig, insbesondere zweiteilig, aufgebaut.

## Beschreibung

Die Erfindung betrifft ein Implantatsystem zur Befestigung von verblocktem, lösbarem Zahnersatz im Kiefer eines Patienten mit wenigstens einem distalen und wenigstens einem mesialen Implantat, wobei das jeweilige Implantat jeweils ein Einschraubteil mit einem Außengewinde, ein in das Einschraubteil einsetzbares Abutment und ein mit dem Abutment mit einer Funktionsschraube verschraubbares Funktionsteil zur Aufnahme des Zahnersatzes umfasst. Sie betrifft weiterhin ein dafür geeignetes Implantat. Im Rahmen dieser Anmeldung bezeichnet der Begriff Implantat die Gesamtheit aus Funktionsteil, Abutment bzw. Aufbauteil und Einschraubteil, während der Begriff Implantat gewöhnlich nur das Einschraubteil bezeichnet.

Derartige Implantatsysteme sind in besonderem Maße dazu geeignet, einen Patienten kurzfristig mit Zahnersatz in Form von beispielsweise verschraubten Brücken zu versorgen. Soll beispielsweise einem Patienten eine Brücke eingesetzt werden, die im Unterkiefer den im Wesentlichen gesamten sichtbaren Zahnbereich umfasst, werden dabei gewöhnlich zwei mesiale Implantate im Bereich der vorderen Schneidezähne und zwei distale Implantate im hinteren Kieferbereich verwendet. Dem jeweiligen Implantat sind dabei jeweils ein Abutment und ein darauf befestigtes Funktionsteil zur Aufnahme des Zahnersatzes zugeordnet. Dieser Zahnersatz kann von einem Zahntechniker eingesetzt, verschraubt und auch wieder gelöst werden. Eine Einsetzung eines derartigen Implantatsystems in den Kiefer des Patienten und eine Versorgung mit entsprechendem Zahnersatz kann heutzutage innerhalb von wenigen Tagen erfolgen, so dass der Patient nicht mehrere Wochen oder gar Monate ohne eigene Zähne und gleichzeitig ohne Zahnersatz verbringen muss.

Bekannte Lösungen derartiger Implantatsysteme weisen gewöhnlich Abutments bzw. Aufbauteile auf, die direkt in das Einschraubteil eingeschraubt werden, wobei diese Abutments dann die Funktionsteile aufnehmen. Die mit derartigen Implantatsystemen befestigten Brücken und Zahnersatzkomponenten können sich von dem vorderen Bereich des Kiefers auf jeder Seite bis in den hinteren Bereich der Backenzähne erstrecken. Aufgrund dieser weiten Ausdehnung des Zahnersatzes bzw. der Zahnprothese im Kiefer ist diese bei Kau- und Beißvorgängen des Patienten sowohl in Stärke als auch in Richtung bzw. Orientierung variierenden Belastungen ausgesetzt.

Der Erfindung liegt die Aufgabe zugrunde, ein Implantatsystem der oben genannten Art anzugeben, bei dem die Verankerung von verblocktem Zahnersatz in einem Kiefer gegenüber herkömmlichen Lösungen verbessert ist. Weiterhin soll ein dafür geeignetes Implantat angegeben werden.

In Bezug auf das Implantatsystem wird diese Aufgabe erfindungsgemäß gelöst, indem das Abutment des jeweiligen mesialen Implantats mehrteilig, insbesondere zweiteilig, aufgebaut ist.

Vorteilhafte Ausgestaltungen der Erfindung sind Gegenstand der Unteransprüche.

Die Erfindung geht von der Überlegung aus, dass bei im Kiefer weit ausgedehntem, von mehreren Implantaten gehaltenem Zahnersatz dieser einschließlich seiner Verankerung im Kiefer durch die Implantate besonders im vorderen Bereich des Kiefers starken Belastungen ausgesetzt ist. In diesem Bereich können nämlich neben Druck- und Reibkräften auch seitliche Schubkräfte und Zugkräfte auftreten. Dies wird dadurch begründet, dass sich der Zahnersatz bzw. die Brücke vom vorderen Bereich des Kiefers über die distalen Implantate und sogar über den Bereich der (ehemaligen) Backenzähne hinaus ausdehnen kann. Durch entsprechende Kaubewegungen können Kippbewegungen des Zahnersatzes um eine durch im Wesentlichen die distalen Implantate gehenden gedachte Achse entstehen. Weiterhin können Verschiebungen des Zahnersatzes als Ganzes auftreten und zu Schubkräften führen.

Um einen dauerhaften Halt der Zahnprothese im Kiefer bei geringstmöglichem Materialverschleiß bzw. Bruch- oder Versagensrisiko zu gewährleisten, sollten die im vorderen Kieferbereich auftretenden Kräfte möglichst gut durch die Konstruktion des Implantatsystems bzw. der dort befindlichen Implantate kompensiert werden. Dies ist bei einem einteilig ausgeführten Abutment, welches in das Einschraubteil eingeschraubt wird und nur im Bereich der Verschraubung Kräfte aufnehmen bzw. kompensieren kann, nur unzureichend möglich.

Wie nunmehr erkannt wurde, lässt sich diese Aufgabe dadurch bewerkstelligen, dass bei dem jeweiligen mesialen Implantat, also bei dem gerade und im Wesentlichen senkrecht zum Knochen eingebrachten Implantat, das Abutment mehrteilig, insbesondere zweiteilig ausgeführt ist. Durch eine Verwendung mehrerer ineinander greifender Komponenten können so Schnittstellen zwischen diesen Komponenten geschaffen werden, die sich zur Aufnahme bzw. Kompensation der in diesem Bereich bestehenden Kräfte in besonderem Maße eignen. Insbesondere eine zweiteilige Ausführungsform des Abutments bzw. Aufbauteils stellt einen optimierten Kompromiss zwischen der Anzahl der verwendeten Komponenten und der durch diese Mehrteilung erreichbaren Funktionalität dar. Durch das angegebene Implantatsystem wird eine implantatbasierte verschraubbare Suprakonstruktion realisiert, bei der die entsprechenden Prothetikkomponenten okklusal verschraubbar sind.

In einer bevorzugten Ausführungsform ist das Abutment des mesialen Implantats zweiteilig aufgebaut aus einem in das Einschraubteil einsetzbaren Einsetzteil und einem in das Einsetzteil einsetzbaren Einschraubpfosten.

Das Einsetzteil weist in einem apikalen Bereich vorteilhafterweise ein Außenverbindungsstück auf, welches von einem Innenbereich des Einschraubteils zur Bildung einer formschlüssigen rotationsgesicherten bzw. verdrehsicheren Verbindung aufgenommen wird. In besonders vorteilhafter Ausgestaltung ist das Außenverbindungsstück als Außensechskant ausgebildet, der von einem als Innensechskant ausgebildeten Innenbereich des Einschraubteils formschlüssig aufgenommen wird. Dadurch wird eine verdrehsichere Verbindung von Abutment bzw. dessen Einsetzteil und Einschraubteil geschaffen, durch die eine Lockerung bzw. Abnutzung der Verbindung von Abutment und Einschraubteil gegenüber Lösungen, in denen Abutment und Einschraubteil nur im Wesentlichen miteinander verschraubt sind, stark reduziert wird. Statt einem Sechskant kann auch eine geringere oder größere Anzahl von Kanten verwendet. Denkbar sind auch vierkantige Verbindungen oder Anschlusstücke mit Flossen, Rippen oder Kanten, die in entsprechenden Schlitze im Einschraubteil aufgenommen werden.

Zur Befestigung und Verankerung des Abutments in dem Einschraubteil des Implantats weisen das Einschraubteil vorteilhafterweise ein Innengewinde und der Einschraubpfosten in einem apikalen Endbereich ein passendes Außengewinde auf, so dass der Einschraubpfosten in das Einschraubteil einschraubbar ist. Der Einschraubpfosten wird also in das ins Einschraubteil eingesetzte bzw. einsteckte Einsetzteil eingesetzt und dann in seinem unteren, dem Kiefer zugewandten Bereich, mit seinem Außengewinde in ein passendes Innengewinde des Einschraubteils verschraubt. Auf diese Weise werden Einschraubpfosten, Einsetzteil und Einschraubteil fest miteinander verbunden. Im Gegensatz zu bekannten Lösungen, in denen das Abutment im mesialen Bereich einteilig ausgeführt ist und direkt in das Einschraubteil eingeschraubt wird, ermöglicht die zweiteilige Ausführung des Abutments mit Einschraubpfosten und Einsetzteil eine stabilere Verbindung.

Der Einschraubpfosten weist zur Aufnahme des Funktionsteils an einem koronalen Kopfbereich vorteilhafterweise einen fluchtend konischen Aufsatz auf. Auf diesen gewissermaßen formkongruent fluchtenden konischen Aufsatz kann dann das Funktionsteil mit einem entsprechenden Innenkonus in einer nicht klemmschlüssigen, leicht lösbaren bzw. leicht demontierbaren formschlüssigen Verbindung aufgesetzt werden. Über eine derartige formschlüssige konische Verbindung können Haftreibungskräfte und auch Abriebkräfte, die durch eine Relativbewegung des Zahnersatzes zwischen dem mesialen und dem distalen Bereich hervorgerufen werden, minimiert werden. Zudem können die aufgrund der gleichen Einschubrichtung von Zahnersatz gewöhnlich nicht vermeidbaren Achsdivergenzen, die oft im Bereich von 5-10° liegen, ausgeglichen werden. Das Funktionsteil wird dann mit einer Funktionsschraube in bekannter Weise im Kopfbereich des Einschraubpfostens mit diesem verschraubt. Durch die formangepasste und lösbare Verbindung des Funktionsteils mit dem Abutment kann der Zahnersatz jederzeit abgeschraubt und leicht von den jeweiligen Abutments abgehoben werden.

In einer bevorzugten Ausführungsform schließt sich an ein apikales Ende des Kopfbereichs des Einschraubpfostens ein Führungszylinder, insbesondere mit einem konischen Auflagesitz bzw. einer konischen Zentrierauflage, an, welcher im eingesetzten Zustand von dem Einsetzteil formschlüssig aufgenommen wird. Durch eine derartige formschlüssige Verbindung im Bereich des Zylinders zwischen dem Einsetzteil und dem Einschraubpfosten können seitliche Schubkräfte kompensiert werden. Im Gegensatz zu Lösungen mit einem einteilig ausgeführten Abutment stellt die angegebene Lösung also zur Aufnahme seitlich wirkender Kräfte nicht nur die Schraubverbindung mit dem Einschraubteil sondern auch eine zusätzliche formschlüssige Verbindung bereit. Auf den Einschraubpfosten wirkende Schubkräfte können so über den Führungszylinder in formschlüssiger Weise auf das Einsetzteil und von dem Einsetzteil in formschlüssiger Weise über den Sechskant auf das Einschraubteil übertragen werden bzw. zwischen diesen Komponenten verteilt werden. Durch die konische Zentrierauflage, in der sich der Führungszylinder in apikaler Richtung vorzugsweise stark verjüngt, können seitliche Kräfte sowie Relativbewegungen minimiert werden. Zudem wird eine Zentrierung der Auflage des Einschraubpfostens auf dem Einsetzteil erzielt.

Zur weiter optimierten Kraftverteilung sitzt der fluchtende Konus im verschraubten Zustand von Einschraubpfosten und Einschraubteil vorteilhafterweise auf dem Einsetzteil auf.

Um in komfortabler Weise ein Einschrauben des Einschraubpfostens in das Einschraubteil mit entsprechendem Werkzeug zu ermöglichen, weist der Einschraubpfosten am äu-βeren Ende des Kopfbereichs vorteilhafterweise einen Außensechskant auf. Dieser Au-βensechskant ist dabei so ausgeführt, dass er gewissermaßen aus dem konusförmigen Kopfbereich herausgenommen ist, so dass das Funktionsteil über ihn geschoben werden kann.

Um die für die Bereitstellung des Implantatsystems notwendige Anzahl unterschiedlicher Komponenten so gering wie möglich zu halten, sind die Funktionsteile des jeweiligen distalen und mesialen Implantats vorteilhafterweise gleich ausgestaltet. Dementsprechend weisen die Abutments der distalen Implantate ebenfalls wie die mehrteilig, insbesondere zweiteilig aufgebauten Abutments der mesialen Implantate einen fluchtend konischen Aufsatz zur Aufnahme des jeweiligen Funktionsteils auf. In einer weiteren vorteilhaften Ausbildung sind die Funktionsschrauben zum Verschrauben der Funktionsteile mit den Abutments der distalen und mesialen Implantate gleich ausgestaltet. Die Abutments der distalen Implantate sind vorzugsweise einteilig ausgeführt, wobei das jeweilige Abutment in das entsprechende Einschraubteil mit einer Schraube ein geschraubt wird.

Aufgrund der anatomischen Gegebenheiten im distalen Kieferbereich, beispielsweise der im Vergleich zum vorderen Kieferbereich geringen Knochendicke bzw. vertikalen Knochenhöhe, der Unmöglichkeit oder des Verzichtes auf knochenaufbauende Maßnahmen, dem geringen vertikalen Knochenangebot und insbesondere dem Verlauf der Nervenbahnen muss auf die Verwendung von Einschraubteilen, wie sie im vorderen Kieferbereich Einsatz finden, dort gewöhnlich verzichtet werden, sofern sie geradlinig bzw. senkrecht in den Kiefer eingesetzt werden sollen. Statt einer Verkürzung der Länge des Einschraubteils wird in diesen Fällen bevorzugt ein in etwa gleich langes Einschraubteil schräg in den Kiefer eingesetzt, so dass die Länge des Implantats, welches im Kieferknochen befindlich ist, im Wesentlichen mit der entsprechenden Länge der geradlinig im vorderen Kieferbereich eingesetzten Implantate übereinstimmt. Das entsprechende distale Implantat wird dabei im Wesentlichen so in den Kiefer eingesetzt, dass es von einem hinteren Kieferbereich schräg nach vorne in Richtung Vorderkiefer zu liegen kommt.

Damit auf diesen schräg eingesetzten Implantaten eine Befestigung des Zahnersatzes über Funktionsteile wie bei den mesialen Implantaten möglich ist - das heißt, die Funktionsteile sollten hier im Wesentlichen parallel zu den Funktionsteilen im Vorderkiefer ausgerichtet sein - sind die Abutments des jeweiligen distalen Implantats vorteilhafterweise um einen Winkel zwischen 20° und 40°, insbesondere 22° oder 35° abgeschrägt.

In einer bevorzugten Ausführungsform des Implantatsystems sind genau zwei distale und zwei mesiale Implantate vorgesehen. Über eine derartige Anzahl von Implantaten können Brücken bzw. Zahnprothesen, die einen weitläufigen Bereich der Zahnreihe umspannen, in stabiler Weise und gegebenenfalls in symmetrischer Weise in Bezug auf die Kiefermitte eingesetzt werden. In einer weiteren bevorzugten Ausführungsform sind genau zwei distale und genau vier mesiale Implantate vorgesehen. Mit einer derartigen Anordnung kann die Zahnprothese im vorderen Kieferbereich besonders fest verankert werden.

In dem Falle, dass der entsprechende Zahnersatz weit in den hinteren Kieferbereich hineinreicht und/oder die entsprechende Knochensubstanz weitere Befestigungen bzw. Stabilisierungen notwendig macht, sind vorteilhafterweise genau vier distale und genau zwei mesiale Implantate vorgesehen.

Das beschriebene Implantatsystem kann unter Verwendung von genau einem mesialen und genau einem distalen Implantat zur Verankerung von verblocktem Zahnersatz in einem vorderen, seitlichen Bereich des Ober- oder Unterkiefers eingesetzt werden. Auch in diesem Falle können die durch Kau- und Beißbewegungen entstehenden Kräfte durch die angegebene Bauweise des mesialen Implantats auf materialschonende Weise in den Knochen geleitet werden.

In Bezug auf das Implantat wird die oben genannte Aufgabe erfindungsgemäß gelöst, indem das Abutment zweiteilig aufgebaut ist aus einem in das Einschraubteil einsetzbaren Einsetzteil und einem in das Einsetzteil einsatzbaren Einschraubpfosten. Vorteilhafterweise weist das Einsetzteil in einem apikalen Bereich ein Außenverbindungsstück auf, welches von einem Innenbereich des Einschraubteils zur Bildung einer formschlüssigen rotationsgesicherten Verbindung aufgenommen wird. Ein derartiges Implantat bzw. Dentalimplantat eignet sich, neben der Verwendung in einem oben beschriebenen Implantatsystem, auch zur Befestigung von verblocktem Zahnersatz unter Verwendung wenigstens eines weiteren derartigen Implantats und/oder eines natürlichen oder künstlichen Zahnes.

Vorteilhafte Ausgestaltungen des Implantats lassen sich sinngemäß übertragen aus den oben dargestellten Ausgestaltungen des mesialen Implantats des Implantatsystems.

Eine zugehörige lmplantatanordnung bzw. ein zugehöriges Implantatsystem besteht dabei beispielsweise aus einer Mehrzahl derartiger Implantate. Eine derartige Implantatanordnung lässt sich- bei ausreichendem Knochenangebot - frei im Kiefer positionieren. Bei der Verankerung von verblocktem Zahnersatz durch ein derartiges Implantat und einem natürlichem/künstlichen Zahn oder eine Implantatanordnung mit wenigstens zwei dieser Implantate - gegebenenfalls in Kombination mit einem natürlichem/künstlichen Zahn - können die bei Beiß- und Kaubewegungen entstehenden Kräfte auf materialschonende Weise in den Kiefer geleitet werden.

Die Vorteile der Erfindung bestehen insbesondere darin, dass eine mehrteilige Ausführung des Abutments des jeweiligen mesialen Implantats im vorderen Kieferbereich Möglichkeiten zur gezielten Kompensation von in diesem Kieferbereich auftretenden Beanspruchungen und Kräften, wie beispielsweise seitlichen Schubkräften, Haftreibungskräften, Abrieben, Lockerungen, Zugkräften und Mikrobewegungen eröffnet. Insbesondere bei einer zweiteiligen Ausführungsform des Abutments kann einerseits diese Funktionalität bereitgestellt werden, andererseits wird die Anzahl der Bauteile bzw. Komponenten gegenüber der einteiligen Bauweise der Abutments nur äußerst geringfügig erhöht.

Eine vorteilhafte Kräfteverteilung lässt sich insbesondere durch eine Bauweise mit einem in das Einschraubteil des Implantats einsetzbaren bzw. einsteckbaren Einsetzteil und einem in das Einsetzteil einsetzbaren und mit dem Einschraubteil verschraubbaren Einschraubpfosten realisieren. Durch einen an einen Kopfbereich des Einschraubpfostens anschließenden Führungszylinder (und eine sich daran anschließende konische Zentrierauflage) können seitliche Schubkräfte, die bei Kau- und Bissvorgängen auftreten können, kompensiert werden. Durch eine formschlüssige Verbindung mit einem Innensechskant im Einschraubteil und einem Außensechskant im Einsetzteil wird eine verdrehsichere Verbindung zwischen diesen beiden Komponenten hergestellt.

Ein Ausführungsbeispiel der Erfindung wird anhand einer Zeichnung näher erläutert. Darin zeigen in stark schematisierter Darstellung:
- FIG 1: einen Querschnitt eines mesialen Implantats eines Implantatsystems in einer bevorzugten Ausführungsform mit einem Funktionsteil, einem Einschraubteil und einem zweiteiligen Abutment,
- FIG 2: einen Querschnitt eines distalen Implantats eines Implantatsystems in einer bevorzugten Ausführungsform mit einem Funktionsteil, einem Einschraubteil und einem einteiligen Abutment,
- FIG 3: eine perspektivische Darstellung des mesialen Implantats aus FIG 1,
- FIG 4: eine perspektivische Darstellung des distalen Implantats aus FIG 2,
- FIG 5: eine Frontalansicht eines menschlichen Unterkiefers, in den ein Implantatsystem mit zwei Implantaten gemäß FIG 1 und zwei Implantaten gemäß FIG 2 eingesetzt ist und eine Brücke trägt, und
- FIG 6: eine perspektivische Darstellung des menschlichen Unterkiefers mit eingesetztem Implantatsystem auf FIG 5.

Gleiche Teile sind in allen Figuren mit denselben Bezugszeichen versehen.

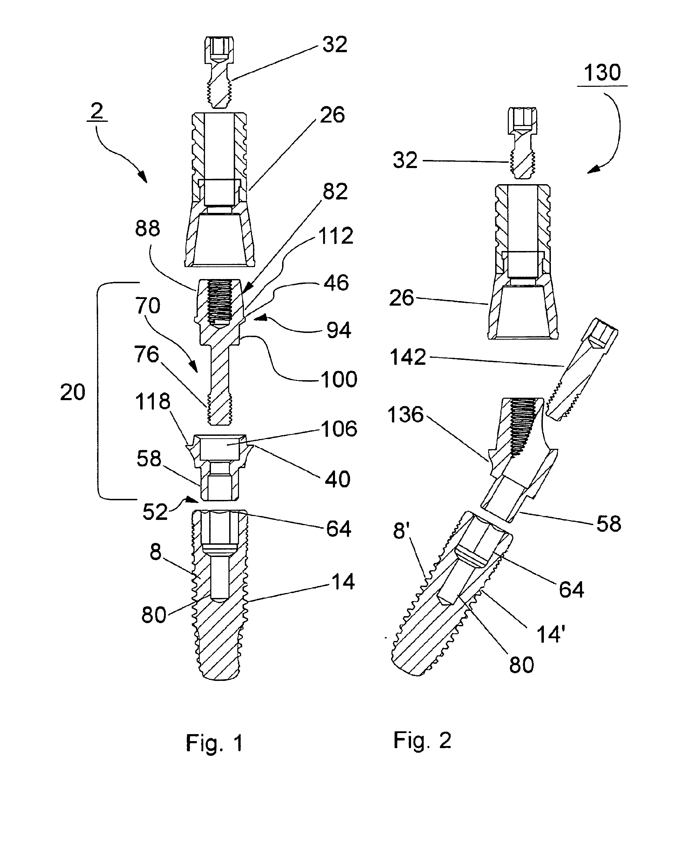

Ein in Fig. 1 im Querschnitt dargestelltes Implantat 2 bzw. Dentalimplantat für den Einsatz im vorderen bzw. mesialen Bereich des Kiefers bzw. im Bereich der Schneidezähne weist ein Einschraubteil 8 auf, welches mit einem Außengewinde 14 zum Einschrauben in den Kieferknochen des Patienten versehen ist. Das mesiale Implantat 2, welches auch als anteriores Implantat bezeichnet werden kann, weist weiterhin ein Abutment 20 auf sowie ein Funktionsteil 26, welches mittels einer Funktionsschraube 32 mit dem Abutment 20 verschraubbar ist. Das Funktionsteil 26 dient der Verankerung von künstlichem Zahnersatz, beispielsweise einer Brücke, im Kiefer des Patienten.

Das Abutment 20 ist zweiteilig ausgestaltet mit einem Einsetzteil 40 bzw. Einsteckteil und einem in das Einsetzteil 40 einsetzbaren und mit dem Einschraubteil 8 verschraubbaren Einschraubpfosten 46. Diese zweiteilige Ausführung des Abutments 20 erlaubt in optimierter Weise die Aufnahme von Kräften, die bei der Belastung von auf vier oder mehr Implantaten verankerten Zahnprothesen auftreten. So weist das Einsetzteil 40 in einem apikalen Bereich 52 einen Außensechskant 58, also einen außenseitig sechskantig ausgeformten Bereich auf, welcher mit einem in dem Einschraubteil 8 vorgesehenen Innensechskant 64, also einem innenseitig ausgeformten sechskantig ausgeformten Bereich, im eingesetzten bzw. eingesteckten Zustand eine formschlüssige und verdrehsichere Verbindung bildet. Das Implantat 2 ist durch die zweiteilige Bauweise des Abutments 20 vierteilig aufgebaut, nämlich aus dem Einschraubteil 8, dem Einsetzteil 40, dem Einschraubpfosten 46 und dem Funktionsteil 26.

Der Einschraubpfosten 46 weist an einem apikalen Endbereich 70 bzw. apikalen Ende ein Außengewinde 76 auf, welches in ein entsprechendes Innengewinde 80 des Einschraubteils 8 einschraubbar ist. Im eingeschraubten Zustand ist das Einsetzteil 40 zwischen Einschraubteil 8 und einem Kopfbereich 82 des Einschraubpfostens 46 verklemmt. In dem Kopfbereich 82 ist ein fluchtend konischer Aufsatz 88 zur Aufnahme des Funktionsteils 26 vorgesehen. An einem apikalen Ende 94 des Kopfbereiches 82, benachbart zum fluchtend konischen Aufsatz 88, ist ein Führungszylinder 100 vorgesehen. Dieser Führungszylinder 100 bildet im eingesetzten Zustand mit einem zylindrischen Innenbereich 106 des Einsetzteils 40 eine formschlüssige Verbindung. Zur zusätzlichen Stabilisierung weist der Kopfbereich 82 des Einschraubpfostens 46 einen vorstehenden Ringbereich 112 auf, welcher im zusammengesetzten Zustand auf einem ringförmigen Vorsprung 118 des Einsetzteils 40 aufliegt.

Durch diese Ausgestaltungen können sowohl (seitliche) Schubkräfte als auch Druck- und Zugkräfte, die insbesondere aufgrund der räumliche Ausdehnung von durch das Implantatsystem gehaltenem künstlichen Zahnersatz, beispielsweise einer Brücke, hervorgerufen werden. Die Beisskräfte belasten den künstlichen Zahnersatz in erster Line auf Druck. Im anterioren Bereich sind dabei die Druckkräfte aus biomechanischen Gründen geringer als im posterioren Bereich. Aufgrund der natürlichen Mahlbewegung überlagern zusätzlich Schubkräfte die Druckkräfte. Die resultierende Gesamtkraft ist damit in Höhe und Ausrichtung dynamisch.

Ein der Erfindung zugrundeliegender typischer Zahnersatz bzw. das entsprechende Implantatsystem weist im distalen Bereich eine Brückenverlängerung nach distal als Freiende auf. Damit verlängern sich die Rekonstruktion und damit auch die Kauzone in den posterioren Bereich. Aufgrund der Hebelverhältnisse treten in diesem Lastfall Zugkräfte auf die mesialen Implantate auf. Die Drehachse verläuft in diesem Fall durch die distalen Implantate. Die Einleitung der Kräfte erfolgt durch die ossäre Verbindung der Implantate (hier Einschraubteile) mit dem Kieferknochen.

Konstruktives Ziel der Erfindung ist die Minimierung der Mikrobewegungen in allen verblockten Schnittstellen bei größtmöglicher Entlastung der Schraubverbindungen durch groß dimensionierte und formschlüssige Führungs- und / oder Auflageflächen.

In Fig. 2 ist ein Implantat 130 dargestellt, welches als posteriores bzw. distales Implantat im distalen Bereich des Kiefers des Patienten eingesetzt wird. Die Funktionsschraube 32 und das Funktionsteil 26 sind mit denen des Implantates 2 identisch. Dadurch müssen nicht unterschiedliche Komponenten für beide Implantatstypen 2, 130 hergestellt werden. Das Implantat 130 weist ein Einschraubteil 8' mit einem Außengewinde 14' auf. Das Einschraubteil 8' mit dem Außengewinde 14' ist bevorzugt gleich ausgeführt wie das Einschraubteil 8 mit dem Außengewinde 14 des mesialen Implantats 2.

Das Abutment 136 des Implantats 130 ist um einen Winkel von 30° abgewinkelt, so dass ― bei im Wesentlichen gleicher Ausrichtung des Funktionsteils 26 mit dem Funktionsteil des jeweiligen Implantats 2 im Kiefer - das Einschraubteil 8' schräg in den Kiefer des Patienten eingesetzt werden kann. Das einteilig ausgeführte Abutment 136 wird mit dem Einschraubteil 8' durch Verschrauben mit einer Schraube 142 verbunden. Das Abutment 136 weist - ähnlich wie das Abutment 20 - einen Außensechskant 58 auf, der im eingeschraubten Zustand mit einem Innensechskant 64 des Einschraubteils 8' eine formschlüssige Verbindung bildet.

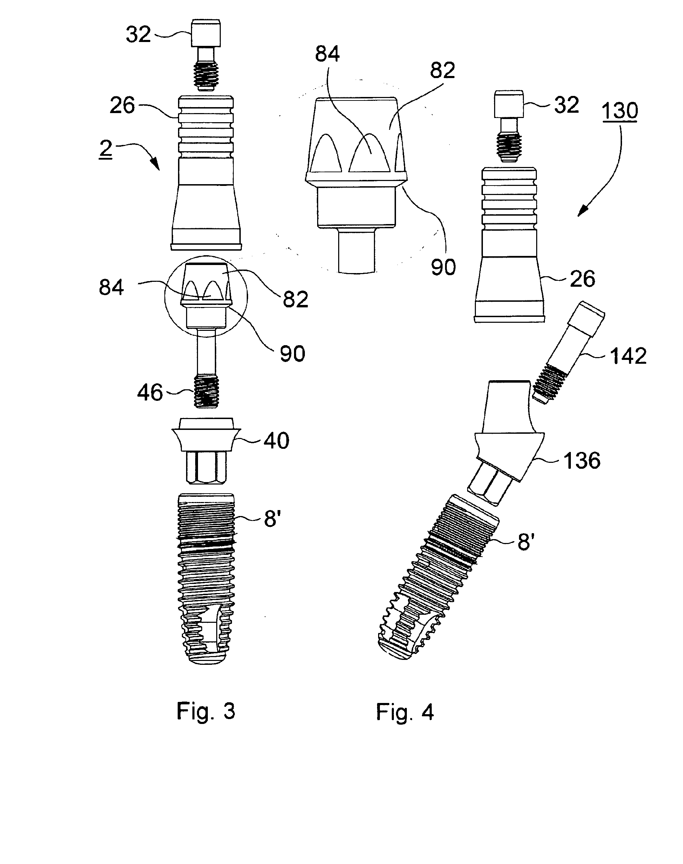

In den Fig. 3 und 4 sind jeweils perspektivische Ansichten in der Art einer Explosionszeichnung der Implantate 2, 130 dargestellt. In Fig. 3 ist der Kopfbereich 82 des Implantats 2 zusätzlich in einer vergrößerten Ansicht gezeigt. Der Kopfbereich 82 weist an seinem äußeren Ende einen Außensechskant 84 auf, über den der Einschraubpfosten 46 mit einem entsprechenden Werkzeug in das Einschraubteil 8 eingeschraubt werden kann. Statt einem Außensechskant 84 kann - je nach Wahl des Werkzeugs - auch eine andere Außenkontur zum Andocken eines geeigneten Einschraubwerkzeuges gewählt werden.

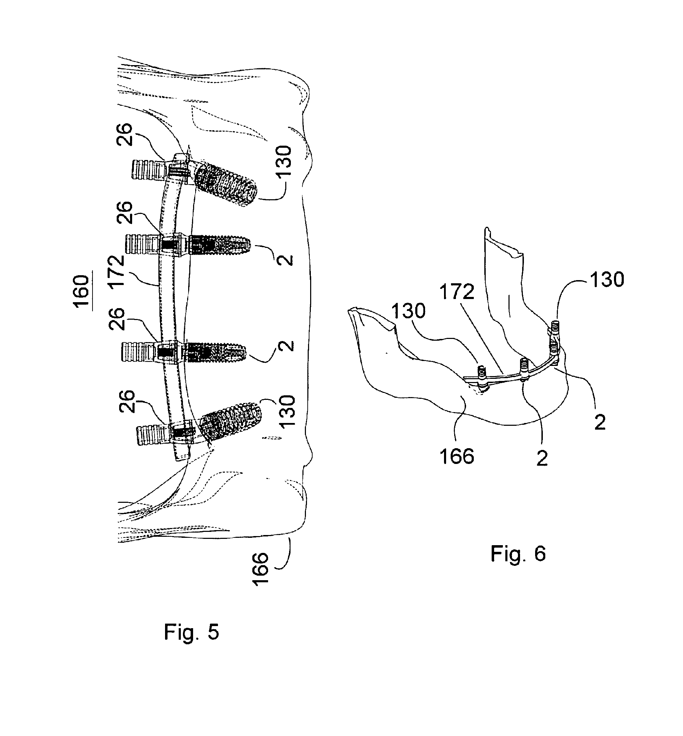

Eine bevorzugte Ausführungsform eines Implantatsystems 160 ist in Fig. 5 in einer Frontalansicht dargestellt. Das Implantatsystem 160 ist dabei in den Unterkiefer 166 eines Patienten eingesetzt. Das Implantatsystem 160 umfasst genau zwei mesiale Implantate 2 und zwei distale Implantate 130. An den jeweiligen Funktionsteilen 36 ist eine schematisch dargestellte Brücke 172 in bekannter Weise befestigt. Hier gibt es aus der Zahntechnik verschiedene Lösungen wie gefräste CAD-CAM Brücken oder Stege bzw. gelötete oder gegossene Brücken bzw. Stege.

Eine perspektivische Darstellung des Unterkiefers 166 aus Fig. 5 ist in Fig. 6 gezeigt. Zu erkennen sind die zwei mesialen Implantate 2 und die zwei distalen Implantate 130 sowie die Brücke 172. In dem Fall, dass sich die Brücke 172 noch weiter in den hinteren Bereich des Unterkiefers 166 erstrecken soll, können auch zwei weitere distale Implantate vorgesehen sein, so dass dann insgesamt zwei mesiale und vier distale Implantate zum Einsatz kommen würden. Das Implantatsystem ist für den Einsatz im Ober- und im Unterkiefer gleichermaßen geeignet.

### Bezugszeichenliste

- 2: Implantat
- 8: Einschraubteil
- 8': Einschraubteil
- 14: Außengewinde
- 14`: Außengewinde
- 20: Abutment
- 26: Funktionsteil
- 32: Funktionsschraube
- 40: Einsetzteil
- 46: Einschraubpfosten
- 52: apikaler Bereich
- 58: Außensechskant
- 64: Innensechskant
- 70: apikaler Endbereich
- 76: Außengewinde
- 80: Innengewinde
- 82: Kopfbereich
- 84: Außensechskant
- 88: konischer Aufsatz
- 90: konischer Auflagesitz
- 94: apikales Ende
- 100: Führungszylinder
- 106: zylindrischer Innenbereich
- 112: Ringbereich
- 118: Vorsprung
- 130: Implantat
- 136: Abutment
- 142: Schraube
- 160: Implantatsystem
- 166: Unterkiefer
- 172: Brücke

## Patentansprüche

1. Implantatsystem (160) zur Befestigung von verblocktem, lösbarem Zahnersatz (172) im Kiefer (166) eines Patienten, mit wenigstens einem distalen (130) und wenigstens einem mesialen Implantat (2), wobei das jeweilige Implantat (2,130) jeweils ein Einschraubteil (8) mit einem Außengewinde (14), ein in das Einschraubteil (8) einsetzbares Abutment (20,136) und ein mit dem Abutment (20,136) mit einer Funktionsschraube (32) verschraubbares Funktionsteil (26) zur Aufnahme des Zahnersatzes (172) umfasst, wobei das Abutment (20) des jeweiligen mesialen Implantats (2) mehrteilig, insbesondere zweiteilig, aufgebaut ist.

2. Implantatsystem (160) nach Anspruch 1, wobei das Abutment (20) des mesialen Implantats (2) zweiteilig aufgebaut ist aus einem in das Einschraubteil (8) einsetzbaren Einsetzteil (40) und einem in das Einsetzteil (40) einsatzbaren Einschraubpfosten (46).

3. Implantatsystem (160) nach Anspruch 2, wobei das Einsetzteil (40) in einem apikalen Bereich (52) ein Außenverbindungsstück aufweist , welches von einem Innenbereich des Einschraubteils (8) zur Bildung einer formschlüssigen rotationsgesicherten Verbindung aufgenommen wird.

4. Implantatsystem (160) nach Anspruch 2 oder 3, wobei das Einschraubteil (8) ein Innengewinde (80) und der Einschraubpfosten (46) in einem apikalen Endbereich (70) ein passendes Außengewinde (76) aufweist, so dass der Einschraubpfosten (46) in das Einschraubteil (8) einschraubbar ist.

5. Implantatsystem (160) nach einem der Ansprüche 2 bis 4, wobei der Einschraubpfosten (46) an einem koronalen Kopfbereich (82) einen fluchtend konischen Aufsatz (88) zur Aufnahme des Funktionsteils (26) aufweist.

6. Implantatsystem (160) nach Anspruch 5, wobei sich an ein apikales Ende (94) des Kopfbereichs (82) ein Führungszylinder (100), insbesondere mit einem konischen Auflagesitz (90), anschließt, welcher im eingesetzten Zustand von dem Einsetzteil (40) formschlüssig aufgenommen wird.

7. Implantatsystem (160) nach Anspruch 5 oder 6, wobei der fluchtend konische Aufsatz (88) im verschraubten Zustand von Einschraubpfosten (46) und Einschraubteil (8) auf dem Einsetzteil (40) aufsitzt.

8. Implantatsystem (160) nach einem der Ansprüche 5 bis 7, wobei der Einschraubpfosten (46) am äußeren Ende des Kopfbereichs (82) einen Außensechskant (84) aufweist.

9. Implantatsystem (160) nach einem der Ansprüche 1 bis 8, wobei die Funktionsteile (26) des jeweiligen distalen (130) und mesialen Implantats (2) gleich ausgestaltet sind.

10. Implantatsystem (160) nach einem der Ansprüche 1 bis 9, wobei die Funktionsschrauben (32) zum Verschrauben der Funktionsteile (26) mit den Abutments (20) der distalen (130) und mesialen Implantate (2) gleich ausgestaltet sind.

11. Implantatsystem (160) nach einem der Ansprüche 1 bis 10, wobei das Abutment (136) des jeweiligen distalen Implantats (130) um einen Winkel zwischen 20° und 40°, insbesondere 22° oder 35° abgeschrägt ist.

12. Implantatsystem (160) nach einem der Ansprüche 1 bis 11 mit genau zwei distalen (130) und genau zwei mesialen Implantaten (2).

13. Implantatsystem (160) nach einem der Ansprüche 1 bis 11 mit genau zwei distalen (130) und genau vier mesialen Implantaten (2).

14. Implantat (2), insbesondere zur Verwendung als mesiales Implantat in einem Implantatsystem nach einem der Ansprüche 1 bis 13, mit einem Einschraubteil (8) mit einem Außengewinde (14), ein in das Einschraubteil (8) einsetzbares Abutment (20) und ein mit dem Abutment (20) mit einer Funktionsschraube (32) verschraubbares Funktionsteil (26) zur Aufnahme des Zahnersatzes, wobei das Abutment (20) zweiteilig aufgebaut ist aus einem in das Einschraubteil (8) einsetzbaren Einsetzteil (40) und einem in das Einsetzteil (40) einsatzbaren Einschraubpfosten (46).

15. Implantat (2) nach Anspruch 14, wobei das Einsetzteil (40) in einem apikalen Bereich (52) ein Außenverbindungsstück aufweist, welches von einem Innenbereich des Einschraubteils (8) zur Bildung einer formschlüssigen rotationsgesicherten Verbindung aufgenommen wird.

## Geänderte Patentansprüche

### Geänderte Patentansprüche gemäss Regel 137(2) EPÜ.

**1.** Implantatsystem (160) zur Befestigung von verblocktem, lösbarem Zahnersatz (172) im Kiefer (166) eines Patienten, mit wenigstens einem distalen (130) und wenigstens einem mesialen Implantat (2), wobei das jeweilige Implantat (2,130) jeweils ein Einschraubteil (8) mit einem Außengewinde (14), ein in das Einschraubteil (8) einsetzbares Abutment (20,136) und ein mit dem Abutment (20,136) mit einer Funktionsschraube (32) verschraubbares Funktionsteil (26) zur Aufnahme des Zahnersatzes (172) umfasst, wobei das Abutment (20) des jeweiligen mesialen Implantats (2) zweiteilig, aufgebaut ist, wobei das Abutment (20) des mesialen Implantats (2) zweiteilig aufgebaut ist aus einem in das Einschraubteil (8) einsetzbaren Einsetzteil (40) und einem in das Einsetzteil (40) einsatzbaren Einschraubpfosten (46), wobei der Einschraubpfosten (46) an einem koronalen Kopfbereich (82) einen fluchtend konischen Aufsatz (88) zur Aufnahme des Funktionsteils (26) aufweist, wobei sich an ein apikales Ende (94) des Kopfbereichs (82) ein Führungszylinder (100) mit einem konischen Auflagesitz (90), anschließt, welcher im eingesetzten Zustand von dem Einsetzteil (40) formschlüssig aufgenommen wird, und wobei der Kopfbereich (82) des Einschraubpfostens (46) einen vorstehenden Ringbereich (112) aufweist, welcher im zusammengesetzten Zustand auf einem ringförmigen Vorsprung (118) des Einsetzteils (40) aufliegt.

**2.** Implantatsystem (160) nach Anspruch 1, wobei das Einsetzteil (40) in einem apikalen Bereich (52) ein Außenverbindungsstück aufweist, welches von einem Innenbereich des Einschraubteils (8) zur Bildung einer formschlüssigen rotationsgesicherten Verbindung aufgenommen wird.

**3.** Implantatsystem (160) nach Anspruch 2, wobei das Einschraubteil (8) ein Innengewinde (80) und der Einschraubpfosten (46) in einem apikalen Endbereich (70) ein passendes Außengewinde (76) aufweist, so dass der Einschraubpfosten (46) in das Einschraubteil (8) einschraubbar ist.

**4.** Implantatsystem (160) nach einem der Ansprüche 1 bis 3, wobei der Einschraubpfosten (46) am äußeren Ende des Kopfbereichs (82) einen Außensechskant (84) aufweist.

**5.** Implantatsystem (160) nach einem der Ansprüche 1 bis 4, wobei die Funktionsteile (26) des jeweiligen distalen (130) und mesialen Implantats (2) gleich ausgestaltet sind.

**6.** Implantatsystem (160) nach einem der Ansprüche 1 bis 5, wobei die Funktionsschrauben (32) zum Verschrauben der Funktionsteile (26) mit den Abutments (20) der distalen (130) und mesialen Implantate (2) gleich ausgestaltet sind.

**7.** Implantatsystem (160) nach einem der Ansprüche 1 bis 6, wobei das Abutment (136) des jeweiligen distalen Implantats (130) um einen Winkel zwischen 20° und 40°, insbesondere 22° oder 35° abgeschrägt ist.

**8.** Implantatsystem (160) nach einem der Ansprüche 1 bis 7 mit genau zwei distalen (130) und genau zwei mesialen Implantaten (2).

**9.** Implantatsystem (160) nach einem der Ansprüche 1 bis 7 mit genau zwei distalen (130) und genau vier mesialen Implantaten (2).
